# EUROPEAN PATENT SPECIFICATION

(11) **EP 1 698 776 B1**
(45) Date of publication and mention of the grant of the patent: **03.11.2010**
(21) Application number: 05251227.4
(22) Date of filing: 01.03.2005
(51) Int. Cl.: F02D 41/02, F01N 11/00

(54) **Internal combustion engine control system**
Vorrichtung zur Steuerung einer Brennkraftmaschine
Système de contrôle d'un moteur à explosion

(43) Date of publication of application: 06.09.2006
(73) Proprietor: Delphi Technologies Holding S.à.r.l., 4940 Bascharage (LU)
(72) Inventor: Parmentier, Michael J., 6747 Chatillon (BE)
(74) Representative: Gregory, John David Charles

(56) References cited:
- EP-A- 1 424 480
- DE-A1- 10 203 920
- FR-A- 2 853 691
- US-A- 5 751 602
- PATENT ABSTRACTS OF JAPAN vol. 2003, no. 12, 5 December 2003 (2003-12-05) & JP 2004 225618 A (TOYOTA MOTOR CORP), 12 August 2004 (2004-08-12)

## Description

The invention is related to a controller means for a combustion engine having an exhaust line. Since modern engine control schemes require a thorough knowledge of the thermal state of the exhaust line and its components, such as turbine, catalyst, particle filters, et cetera, the controller means is based on the employment of a model of said exhaust line. The invention is also related to an engine control module for a combustion engine comprising such controller means.

One way to obtain information about the thermal state of the exhaust line would be to include as many sensors in the exhaust line as required. However, providing additional sensors adds to the costs of the system and is therefore unfavourable. One way to circumnavigate the need of having several sensors is to employ mathematical models. Such models are generally based on look-up tables and first order filters that are calibrated by a temperature mapping of the overall system, i.e. the combustion engine or the exhaust line, at different conditions. The calibration of these models and the underlying parameters often require big amount of work because the thermal state of the exhaust line is influenced by a large amount of parameters, like exhaust flow, engine load, engine speed, vehicle speed, VGT (variable geometry turbine) position, turbine pressure ratio, spark/injection timing and all the physical characteristics of the exhaust line components like tube lengths, catalyst mass, substrate shape, et cetera. Once these empirical models have been calibrated, changes in the exhaust line architecture and/or engine calibration (timing, throttle, exhaust gas recirculation, variable geometry turbine position, etc.) often require the recalibration of the thermal state and model.

FR 2 852 691 discloses a method of modelling a NOx catalyst in an exhaust line of a vehicle. The catalyst is modelled as a series of perfectly agitated reactors connected in series. For each reactor the temperature of the trap substrate and the temperatures inside and at the outlet of the reactor are computed based on exhaust gas mass flow and exhaust gas temperature upstream of the reactor.

EP 1 424 480 relates to a virtual pressure sensor for a common rail injection system.

It is an object of the present invention to overcome problems and drawbacks described above.

This is achieved by employing a controller means, as set forth in claim 1. The controller means is a controller means for a combustion engine with an exhaust line. The controller means employs a mathematical model of said exhaust line. The model comprises a succession of function blocks adapted for performing mathematical functions related to at least two input signals applied as two inputs of the function block. These at least two inputs are the same, in the sense of being compatible or functional identical, throughout all the function blocks. Each function block within the model may comprise more than said two inputs but at least these two inputs are present for each function block within the model. As regards the compatibility of these two inputs throughout all the function blocks it is to be understand, that each function block within the model can read at a first input of those two inputs input data of a certain type and at a second input of these two inputs input data of another certain type. In a preferable embodiment each function block can read at the first of these two inputs an input related to the exhaust flow and at the second of these two inputs a temperature value, related to an inlet gas temperature. Therefore, since, keeping the above explanation in mind, each function block processes the value of a variable representing the exhaust flow and the value of a variable representing a gas temperature, it is justified, to denote the relevant inputs as being "the same" throughout all the function blocks or as being identical or compatible throughout all the function blocks.

The advantage of the inventive concept, which underlies the above controller means, is that each element or device within the exhaust line can be represented in the model via a separate function block. Due to each function block having at least two inputs which are the same throughout all the function blocks, the succession as well as the number of function blocks comprised in the model can be adapted the requirements according to the relevant exhaust line. I.E. if the exhaust line comprises a diesel oxidation catalyst (DOC) and a diesel particle filter (DPF), the model would comprise a function block representing the DOC and another function block representing the DPF. If however, the DOC and the DPF in the exhaust line are not comprised within the same housing, the DOC and the DPF will be linked to each other via a connecting tube. Whenever such a tube is required between two function blocks within the model, according to the invention one could simply insert the relevant function block representing the tube between the function blocks representing the DOC and the DPF. Further, if the need should arise to change the succession of the function blocks, one could simply reflect those changes in the model, by arranging the relevant function blocks in the appropriate order according to the exhaust line.

Preferably, each of the function blocks is adapted to generate at least one output signal as an output of the relevant function block. If said at least one output is the same or compatible (in the sense as described above) throughout all the function blocks, this allows to connect the output of each function block to a certain input, especially an input of one of said at least two inputs which are the same throughout all the function blocks, of the function block next in line. The compatibility of said at least two inputs and said at least one output of all the function blocks facilitates the creation of the model comprised in the controller means, since due to the type and nature of the inputs or outputs the function blocks within the model can almost automatically be interconnected.

In a preferred embodiment a first of said at least two inputs is simultaneously fed to all the function blocks. In a further preferred embodiment said first of said at least two inputs represents an exhaust flow through the exhaust line. The exhaust flow in kilograms per second is identical for each component of the exhaust line, i.e. the exhaust flow through a tube preceding the DOC is the same as the exhaust flow in the DOC or any tube commencing the DOC.

If a succession of function blocks said at least one output of a first function block is fed to one of said at least two inputs of a second function block next in line to said first function block, all the function block comprised in the model can be interconnected automatically. Even if the need arises to move a function block, which at first was comprised in the model at a first position in the succession of the function blocks, the relevant connections between the function blocks involved can be maintained automatically. The connections to and from the function block, which is to be moved, can be opened and the output of the function block preceding the function block to be moved can be automatically connected to the then free input of said at least two inputs of the function block succeeding the function block, which has been moved. At the new position the connections between the function block preceding the new position of the moved function block and its successor can be opened automatically and the connection from the function block preceding the position of the new function block and from the new function block to the function block succeeding the position of the new function block can be interconnected automatically by feeding the output of the relevant predecessor to the then free input of said at least two inputs of the respective successor in the succession in the new succession of function blocks.

It is beneficial, if said at least two inputs of said first function block within the succession of all the function blocks comprised in the model are adapted for measured values to be fed to said first function block. In doing so only the first function block processes measured values and a pre-processing of such measured values, if necessary, needs only take place once, namely before these measured values are fed to the first function block.

The object of the present invention can also be achieved by carrying out the method as set forth in claim 6. The method according to the invention is a method of using the controller means as described beforehand and the method comprises the steps of supplying a first and a second external input to the controller means and to the model comprised in the controller means, feeding at one of said at least two inputs said first external input to each function block comprised in the model, feeding said second external input to a first function block within the succession of all function blocks comprised in the model at the remainder of said at least two inputs, feeding the output of said first function block to the function block next in line at the remainder of said at least two inputs and feeding for subsequent function blocks the output of the preceding function block to the function block next in line at the remainder of said at least two inputs.

The method can be processed automatically, for example via design software, which enables an engineer to configure the model representing the exhaust line. The engineer would then configure the model by selecting the relevant function blocks from a database offering a variety of function blocks, each representing different units, components or devices of an exhaust line, and placing these function blocks at a certain position reflecting the position of the relevant unit device or component in the exhaust line. Interconnecting all the function blocks can at least partially be accomplished automatically according to the specific identity of said at least two inputs and said at least one output.

Preferably, the controller means as described beforehand can be comprised in an engine control module or an equivalent device in a vehicle.

The essential advantages of the invention are that numerous function blocks can be provided in order to account for different components in the exhaust line and also to account for different types of such components. The multitude of function blocks is then available from a database to be selected according to the specific requirements. The invention therefore essentially provides for a method to ease modelling of an exhaust line by selecting the necessary functions block from said data base which functions as a tool-box.

Other features and advantages of the present invention will appear from the following description of a preferred embodiment of the invention, given as a non-limiting example, illustrated in the drawings. All the elements which are not required for the immediate understanding of the invention are omitted. In the drawing, the same elements are provided with the same reference numerals in the various figures, an in which:
- Fig. 1: is a simplified depiction of components and elements in an exhaust line,
- Fig. 2: is a simplified block chart diagram of a model comprised of a succession of function blocks,
- Fig. 3: is a simplified block chart diagram of an exhaust line model and
- Fig. 4 and Fig. 5: is a simplified block chart diagram of the internals of function blocks comprised in the model.

In the following description, for purposes of explanation and not limitation, specific details are set forth, such as particular embodiments, data flows, signalling implementations, interfaces, techniques, etc. in order to provide a thorough understanding of the present invention. However, it will be apparent to one skilled in the art that the present invention may be practiced in other embodiments that depart from these specific details. In other instances, detailed descriptions of well-known methods, interfaces, devices, and signalling techniques are omitted so as not to obscure the description of the present invention with unnecessary detail.

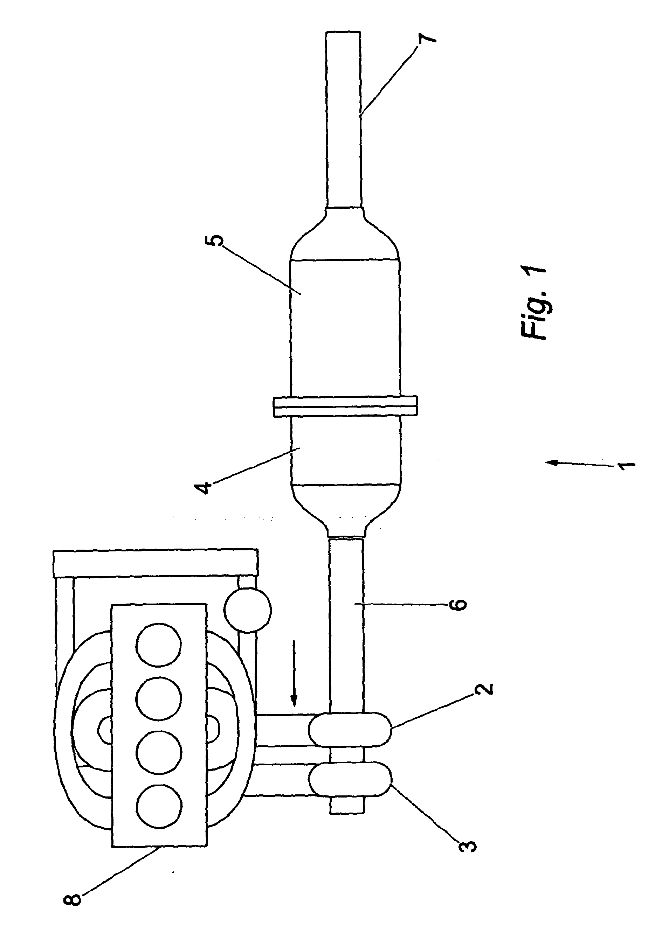

Fig. 1 shows a simplified depiction of components and elements in an exhaust line 1. The exhaust line 1 comprises a turbine 2, a compressor 3, a diesel oxidation catalyst (DOC) 4, and a diesel particle filter (DPF) and/or a Diesel NOx Trap (DNT) 5. DOC 4 and DPF/DNT 5 are comprised in a common housing. The exhaust line further comprises connection tubes 6, 7 for the interconnection of the exhaust line components 2-5. Along the flow of the exhaust gas upstream of the exhaust line 1 is a combustion engine 8, such as a Diesel engine.

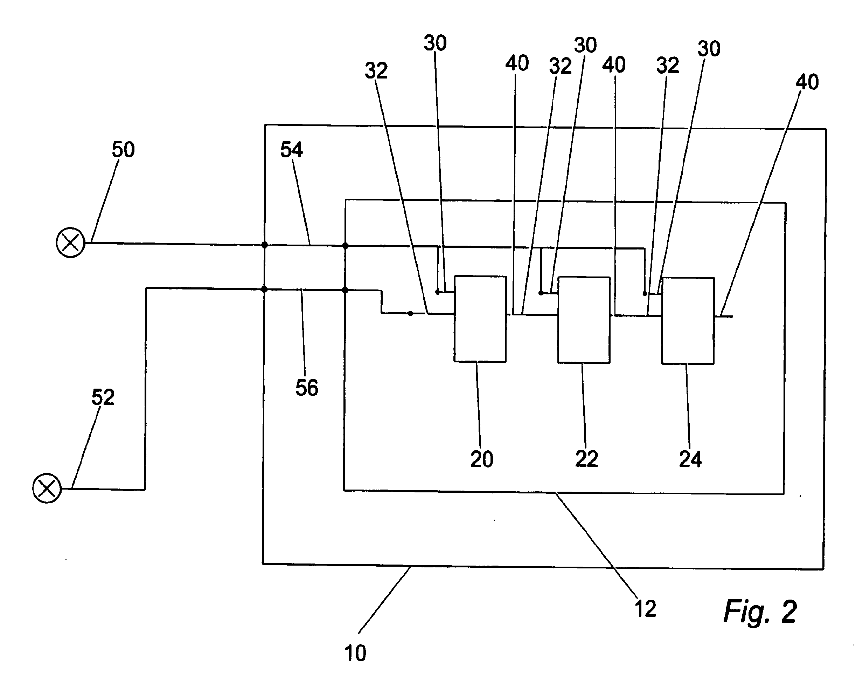

Fig. 2 shows a controller means 10 and a mathematical model 12 comprised in the controller means 10. The mathematical model 12 being comprised in the controller means 10 is to be understood as the mathematical model 12 being implemented as a software application in a memory (not shown) of the controller means 10. The mathematical model 12 comprises a succession of function blocks 20, 22, 24, 26 (only functions blocks 20-26 are shown in Fig. 2). Each function block 20-26 is adapted for performing mathematical functions related to at least two input signals applied as two inputs 30, 32 to the function block 20-26. Said at least two inputs 30, 32 are the same, in the sense of being able to process the same input signals or the same type of input signals throughout all the function blocks 20-26. Each of the function blocks 20-26 is adapted to generate at least one output signal as an output 40 of the relevant function block 20-26. Said at least one output 40 is the same, in the sense as described beforehand, throughout all the function blocks 20-26. The model 12 is adapted to process a first and a second external input signal 50, 52 which can be supplied as a first and a second external input 54, 56 to the controller means 10 and to the model 12 comprised in the controller means 10. Said first external input 54 is fed to one of said at least two inputs 30, 32, for example to a first input 30 of each function block 20-26 comprised in the model 12. In doing so, the first external input 54 is simultaneously fed to all the function blocks 20-26. The second external input 56 is fed to a first function block 20 within the succession of all the function blocks 20-26 comprised in the model at the remainder of said at least two inputs 30, 32, for example at a second input 32. The output 40 of said first function block 20 is fed to the function block 22 next in line at the remainder of said at least two inputs 30, 32, i.e. at an input 30, 32, for example at the second input 32, which is not yet occupied by feeding the first external input 54 to all the function blocks 20-26. For all the subsequent function blocks 24 the output of the preceding function block 22 is fed to the function block next in line at the remainder of said at least two inputs 30, 32, for example at the second input 32.

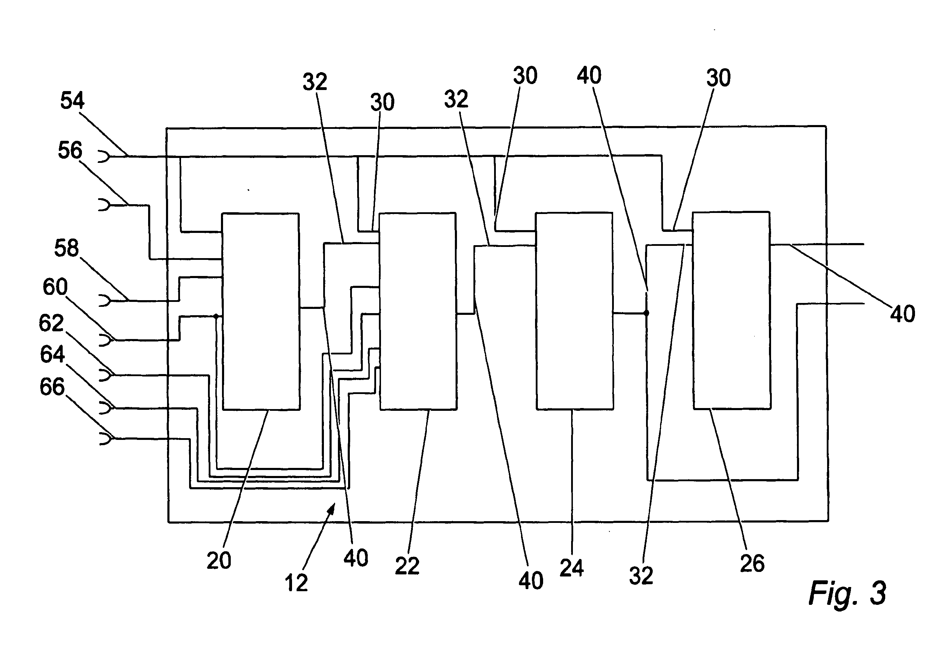

Fig. 3 shows as simplified embodiment of a model 12 of an exemplary exhaust line (not shown). The model comprises of four function blocks 20-26, wherein the first function block 20 represents the elements or devices of the exhaust 1 line between the outlet of the combustion engine 8 (engine out = EO) and an inlet pipe of the turbine 2 in the exhaust line 1. The first function block 20 accordingly represents the part "EO to turbine pipe" 6 of the exhaust line 1. A second function block 22, next in line to said first function block 20, represents the turbine 2 comprised in the exhaust line 1. A third function block 24, next in line to said second function block 22, represents the DOC 4 comprised in the exhaust line 1. A forth function block 26, next in line to said third function block 24, represents the DNT (Diesel NOx Trap) 5 comprised in the exhaust line 1. The first external input signal 50 is fed at a first input 30 of the at least two inputs 30, 32 of each function block 20-26 to all the function blocks 20-26. The first external input 50 feeds a measured value representing an exhaust mass flow to all the function blocks 20-26 comprised in the model 12. The second external input 52 is fed at a second input 32 of the at least two inputs 30, 32 of each function block 20-26 to the first function block 20 only. The second external input 52 feeds a measured value representing a value of the exhaust gas temperature in the turbine 2, such as the gas temperature at the outlet of the exhaust manifold (engine out), to the model 12. The position of a sensor providing the measured value for the second external input 52 is indicated in Fig. 1 with the horizontal arrow pointing to the tube between the exhaust manifold of the combustion engine 8 and the turbine 2.

For all the function blocks 20-26 the relevant output 40 is fed to the second input 32 of the function block next in line within the model 12. The output 40 of the fourth function block 26, the last function block in the model 12, is a first of at least one output of the model 12. The output 40 of each function block 20-26 represents a temperature value of the outlet of the relevant component or device of the exhaust line 1 modelled by the relevant function block. Accordingly, the output 40 of the fourth function block 26, representing the DNT 5, is a modelled value for the temperature of the exhaust gas at the outlet of the DNT 5. If the DNT 5 is downstream the exhaust gas flow the last component or device of the exhaust line 1, then the output of the relevant function block 26 represents the modelled value of the temperature of the output of the exhaust line 1. Such output data can be used for sophisticated control of the combustion process, exhaust gas recirculation, VGT control, et cetera. If such control requires further data, such as the exhaust gas temperature at further points along the exhaust line 1, for example after the DOC 4, one could simply use the output of the relevant function block 20-26 as a further output of the model 12 as is shown in Fig. 3 for the output of the third function block 24 representing the DOC 4.

In the specific embodiment depicted in Fig. 3 the model 12 processes further external inputs 58, 60, 62, 64, 66, wherein a first 58 of the further external inputs 58-66 represents a measured value of the speed of the vehicle comprising the combustion engine 8, the exhaust line 1 an the controller means 10. A second 60 of the further external inputs 58-66 represents a measured value of the inlet air temperature, i.e. the temperature of the ambient air, and is fed both to the first and the second function block 20, 22.

A third 62 of the further external inputs 58-66 represents a measured value of the inlet airflow. A forth 64 of the further external inputs 58-66 represents a measured value of the pressure at the inlet of the compressor 3 and a fifth 66 of the further external inputs 58-66 represents a measured value of the pressure at the outlet of the compressor 3. All these further external inputs 62, 64, 66 are fed to the second function block 22 representing the turbine 2 of the exhaust line 1. It is to be noted, that the output 40 of the second function block 22, representing the turbine 2, is not based on input data referring to the turbine 2. Rather input data referring to the compressor 3 and the exhaust line 1 is used. This means, that the turbine 2 is modelled without using turbine data which is beneficial since obtaining the relevant turbine data would be much more complicated as using the data as show in Fig. 3. Usage of compressor related data rather than turbine related data is possible due to the fact that the pressure difference in the compressor 3 is proportional to the temperature loss in the turbine 2.

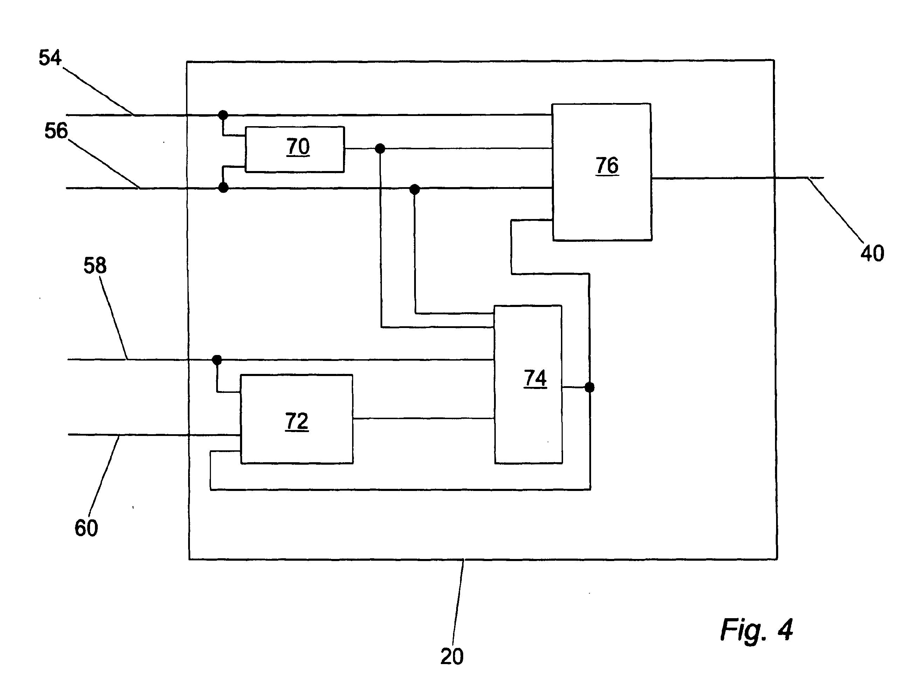

Fig. 4 shows in more detail some internals of the first function block 20 representing the "EO to turbine pipe" 6 of the exhaust line 1. The first function block 20 comprises internal function blocks 70, 72, 74, 76, wherein a first and a second internal function block 70, 72 are employed for modelling the internal and the external heat exchange behaviour of the tube 6. The output of the first internal function block 70 therefore represents a value for an internal heat exchange coefficient. The output of the second internal function block 72 represents a value for an external heat exchange coefficient, taking into account temperature losses at the outer surface of the tube 6. The output of these internal function blocks 70, 72 is used together with some of the external inputs and further external inputs 56, 58 for modelling the Temperature of the inner wall of the tube 6 in a third internal function block 74. It is to be noted, that the output for the third internal function block 74 is fed to the input of the second internal function block 72, while the output of the second internal function block 72 is one of the inputs of the third internal function block 74. The output of the third internal function block 74 is one of the inputs for a forth internal function block 76 which models the exhaust gas temperature within the tube 6. The output of the fourth internal function block 76 is the output 40 of the output 40 of the first function block 20.

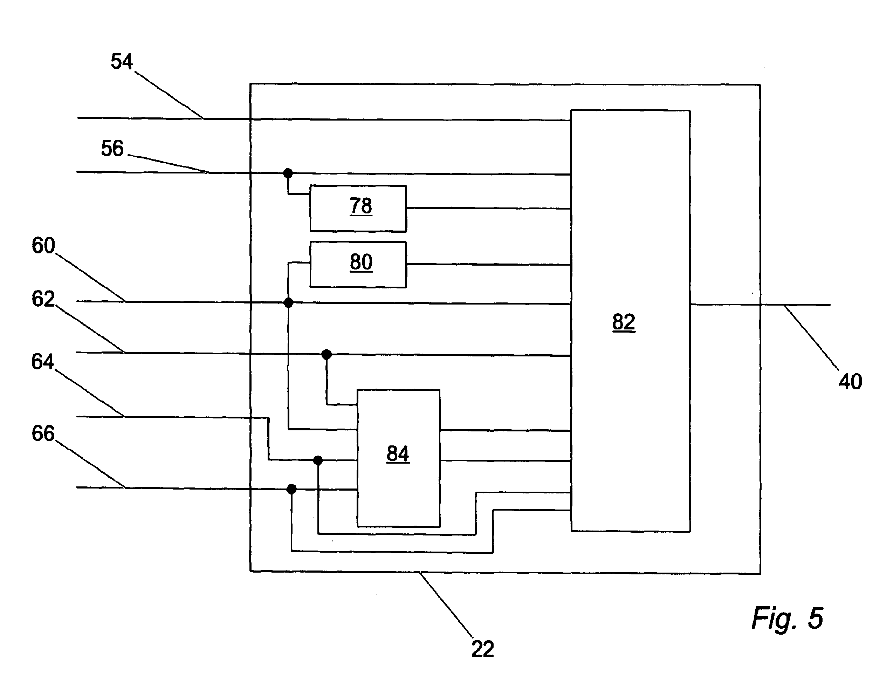

Fig. 5 shows in more detail some internals of the second function block 22 representing the turbine 2 of the exhaust line 1. The second function block 22 comprises further internal function blocks 78, 80, 82, 84, wherein first and second further internal function block 78, 80 are employed for modelling the heat capacity of the inlet gas and the heat capacity of the inlet air, where the temperature of the inlet gas is provided via input of 56 and the temperature of the inlet air is provided via input 60. The third further internal function block 82 is employed for modelling the temperature within the turbine 2. The output of the third further internal function block 82 is the output 40 of the second function block 22 modelling the turbine 2. Further inputs for the third internal function block 82 are provided by a fourth further internal function block 84, which comprises compressor maps and essentially functions as a look-up table. The fourth further internal function block provides for two inputs derived from the airflow, the temperature of the input air and the pressure at the compressor inlet and the pressure at the compressor outlet. These outputs represent a compressor efficiency and a compressor speed. Both outputs are fed to the third further internal function block 82 and are processed together with the first and second external inputs 54, 56 and with some of the further external inputs 60, 62, 64, 66 in order to obtain a value representing the temperature of the outlet gas of the turbine 2. Due to the employment of the compressor map within the fourth further internal function block 84 the temperature at the outlet of the turbine 2 can be modelled without specific turbine related data. This is, as mentioned above, due to the fact that the pressure ratio over the compressor 3, i.e. the ratio between the compressor inlet pressure and the compressor outlet pressure, is proportional to the temperature loss over the turbine 2.

Although a preferred embodiment of the invention has been illustrated and described herein, it is recognized that changes and variations may be made without departing from the invention as set forth in the claims.

### Reference Numerals

- 1: Exhaust Line
- 2: Turbine
- 3: Compressor
- 4: Diesel Oxidation Catalyst (DOC)
- 5: Diesel NOx Trap
- 6: Connection Tube
- 7: Connection Tube
- 8: Combustion Engine
- 10: Controller Means
- 12: Mathematical Model
- 20: (First) Function Block
- 22: (Second) Function Block
- 24: (Third) Function Block
- 26: (Forth) Function Block
- 30: (First) Input
- 32: (Second) Input
- 40: Output
- 50: (First) External Input Signal
- 52: (Second) External Input Signal
- 54: (First) External Input
- 56: (Second) External Input
- 58: Further External Input
- 60: Further External Input
- 62: Further External Input
- 64: Further External Input
- 66: Further External Input
- 70: Internal Function Block
- 72: Internal Function Block
- 74: Internal Function Block
- 76: Internal Function Block
- 78: Further Internal Function Block
- 80: Further Internal Function Block
- 82: Further Internal Function Block
- 84: Further Internal Function Block

## Claims

1. Controller means for a combustion engine (8) with at least one turbine, at least one compressor and an exhaust line (1) employing a model (12) of said exhaust line (1),
wherein said exhaust line (1) comprises said at least one turbine (2),
wherein said model (12) comprises a succession of function blocks (20, 22, 24, 26) representing each an element or device of the exhaust line and adapted for performing mathematical functions related to at least two input signals (54, 40) applied as two inputs (30, 32) to the function block (20-26),
wherein said at least two inputs (30, 32) are the same throughout all the function blocks (20-26) in the sense of being able to process the same input signals or the same type of input signals throughout all the function blocks,
**characterised in that**
at least one function block (20, 22, 24, 26) is a turbine function block (22) and adapted for performing mathematical functions representing a model of the turbine related to said at least two inputs (30, 32), and
wherein said turbine function block (22) comprises at least one further input to which at least one further external input signal (62, 64, 66) related to the compressor is applied.

2. The controller means of claim 1,
wherein each of the function blocks (20-26) is adapted to generate at least one output signal as an output (40) of the relevant function block (20-26) and wherein said at least one output (40) is the same, in the sense of being compatible or functionally identical, throughout all the function blocks.

3. The controller means of claim 2,
wherein a first of said at least two input signals (54, 40) is simultaneously fed to all the function blocks (20-26).

4. The controller means of claim 2 or 3,
wherein in a succession of function blocks (20-26) said at least one output (40) of a first function block (20-26) is one of said at least two inputs (30, 32) of a second function block (20-26) next in line to said first function block (20-26).

5. The controller means of claim 4,
wherein said at least two inputs (30, 32) of said first function block (20-26) are adapted for measured values to be fed to said first function block (20-26).

6. The controller means of any one of the preceding claims,
wherein the turbine function block (22) comprises internal function blocks (78, 80, 82, 84)
wherein a first internal function block (80) is adapted for generating a heat capacity of an inlet gas,
wherein a second internal function block (80) is adapted for generating a heat capacity of an inlet air, and
wherein a fourth internal function block (84) is adapted for generating an output relating to the compressor (3).

7. The controller means of claim 6,
wherein said fourth internal function block (84) comprises compressor maps and is adapted for generating said output relating to the compressor (3) on the basis of at least one of said input signals (62, 64, 66) relating to the compressor (3) and said compressor maps.

8. The controller means of claim 7,
wherein said output relating to the compressor (3) is a compressor efficiency and a compressor speed.

9. The controller means of claim 7 or 8,
wherein said at least one of said input signals (62, 64, 66) relating to the compressor (3) is selectable from the group comprising a temperature of an inlet air, an air flow, a pressure at the compressor inlet and a pressure at the compressor outlet.

10. The controller means of any one of claims 6 to 9,
wherein a third internal function block (82) is adapted for generating an output (40) on the basis of at least one of said outputs of said first, second and fourth internal function blocks (78, 80, 84).

11. The controller means of claim 10,
wherein said output of said third internal function block (82) is representing a temperature of an outlet gas of the turbine (2).

12. The controller means of any one of claims 1 to 10, wherein the output (40) of each function block is connected to one of said two inputs (30, 32) of the function block next in line.

13. A method of using the controller means of any one of claims 2 to 5, said method comprising the steps of:
supplying a first and a second external input signal (50, 52) to the controller means (10) and to the model (12) comprised in the controller means (10);
feeding at one of said at least two inputs (30, 32) said first external input signal (50) to each function block (20-26) comprised in the model (12);
feeding one further external input signal (62, 64, 66) related to the compressor to at least one further input of the at least one turbine function block (22);
feeding said second external input signal (52) to a first function block (20-26) within the succession of all the function blocks (20-26) comprised in the model (12) at the remainder of said at least two inputs (30, 32);
feeding the output (40) of said first function block (20-26) to the function block (20-26) next in line at the remainder of said at least two inputs (30, 32) and
feeding for subsequent function blocks (20-26) the output of the preceding function block (20-26) to the function block (20-26) next in line at the remainder of said at least two inputs (30, 32).

14. An engine control module comprising the controller means (10) of any one of the claims 1 to 12.

## Patentansprüche

1. Controllereinrichtung für eine Verbrennungskraftmaschine (8) mit wenigstens einer Turbine, wenigstens einem Kompressor und einer Abgasanlage (1), die ein Modell (12) der genannten Abgasanlage (1) einsetzt,
wobei die genannte Abgasanlage (1) die genannte wenigstens eine Turbine (2) aufweist,
wobei das genannte Modell (12) eine Folge von Funktionsblöcken (20, 22, 24, 26) aufweist, die jeweils ein Element oder eine Vorrichtung der Abgasanlage repräsentieren und für die Durchführung mathematischer Funktionen in Bezug auf wenigstens zwei Eingangssignale (54, 40) ausgelegt ist, die als zwei Eingänge (30, 32) an den Funktionsblock (20-26) angelegt werden,
wobei die genannten wenigstens zwei Eingänge (30, 32) bei allen Funktionsblöcken (20-26) in dem Sinn durchgehend die gleichen sind, dass sie bei durchgehend allen Funktionsblöcken die gleichen Eingangssignale oder den gleichen Typ von Eingangssignalen verarbeiten können,
**dadurch gekennzeichnet, dass**
wenigstens ein Funktionsblock (20, 22, 24, 26) ein Turbinenfunktionsblock (22) ist und für die Durchführung mathematischer Funktionen ausgelegt ist, die ein Modell der Turbine in Bezug auf die genannten wenigstens zwei Eingänge (30, 32) repräsentieren, und
wobei der genannte Turbinenfunktionsblock (22) wenigstens einen weiteren Eingang aufweist, an den wenigstens ein weiteres externes Eingangssignal (62, 64, 66) in Bezug auf den Kompressor angelegt wird.

2. Controllereinrichtung nach Anspruch 1,
wobei jeder der Funktionsblöcke (20-26) für die Erzeugung von wenigstens einem Ausgangssignal als einen Ausgang (40) des relevanten Funktionsblocks (20-26) ausgelegt ist und
wobei der genannte wenigstens eine Ausgang (40) in allen Funktionsblöcken in dem Sinn, dass er kompatibel oder funktionell identisch ist, durchgehend der gleiche ist.

3. Controllereinrichtung nach Anspruch 2,
wobei ein erstes der genannten wenigstens zwei Eingangssignale (54, 40) gleichzeitig in alle Funktionsblöcke (20-26) eingespeist wird.

4. Controllereinrichtung nach Anspruch 2 oder 3,
wobei in einer Folge von Funktionsblöcken (20-26) der genannte wenigstens eine Ausgang (40) eines ersten Funktionsblocks (20-26) einer der genannten wenigstens zwei Eingänge (30, 32) eines zweiten Funktionsblocks (20-26), der nach dem genannten ersten Funktionsblock (20-26) der nächste in der Reihe ist.

5. Controllereinrichtung nach Anspruch 4,
wobei die genannten wenigstens zwei Eingänge (30, 32) des genannten ersten Funktionsblocks (20-26) für die Einspeisung von Messwerten in den genannten ersten Funktionsblock (20-26) ausgelegt sind.

6. Controllereinrichtung nach einem der vorhergehenden Ansprüche,
wobei der Turbinenfunktionsblock (22) interne Funktionsblöcke (78, 80, 82, 84) umfasst,
wobei ein erster interner Funktionsblock (80) für die Erzeugung einer Wärmekapazität eines Einlassgases ausgelegt ist,
wobei ein zweiter interner Funktionsblock (80) zur Erzeugung einer Wärmekapazität einer Einlassluft ausgelegt ist und
wobei ein vierter Funktionsblock (84) für die Erzeugung eines Ausgangs in Bezug auf den Kompressor (3) ausgelegt ist.

7. Controllereinrichtung nach Anspruch 6,
wobei der genannte vierte Funktionsblock (84) Kompressorkennfelder umfasst und zur Erzeugung des genannten Ausgangs in Bezug auf den Kompressor (3) auf der Basis von wenigstens einem der genannten Eingangssignale (62, 64, 66) in Bezug auf den Kompressor (3) und die genannten Kompressorkennfelder ausgelegt ist.

8. Controllereinrichtung nach Anspruch 7,
wobei der genannte Ausgang in Bezug auf den Kompressor (3) ein Kompressorwirkungsgrad und eine Kompressordrehzahl ist.

9. Controllereinrichtung nach Anspruch 7 oder 8,
wobei das genannte wenigstens eine der genannten Eingangssignale (62, 64, 66) in Bezug auf den Kompressor (3) aus der Gruppe umfassend eine Temperatur einer Einlassluft, einen Luftstrom, einen Druck am Kompressoreinlass und einen Druck am Kompressorauslass auswählbar ist.

10. Controllereinrichtung nach einem der Ansprüche 6 bis 9,
wobei ein dritter interner Funktionsblock (82) für die Erzeugung eines Ausgangs (40) auf der Basis von wenigstens einem der genannten Ausgänge des genannten ersten, zweiten und vierten internen Funktionsblocks (78, 80, 84) ausgelegt ist.

11. Controllereinrichtung nach Anspruch 10,
wobei der genannte Ausgang des genannten dritten internen Funktionsblocks (82) eine Temperatur eines Auslassgases der Turbine (2) repräsentiert.

12. Controllereinrichtung nach einem der Ansprüche 1 bis 10, wobei der Ausgang (40) jedes Funktionsblocks mit einem der genannten zwei Eingänge (30, 32) des nächsten Funktionsblocks in der Reihe verbunden ist.

13. Verfahren für die Verwendung der Controllereinrichtung nach einem der Ansprüche 2 bis 5, wobei das genannte Verfahren die folgenden Schritte umfasst:
Anlegen eines ersten und eines zweiten externen Eingangssignals (50, 52) an die Controllereinrichtung (10) und das in der Controllereinrichtung (10) enthaltene Modell (12),
Einspeisen des genannten ersten externen Eingangssignals (50) an einem der genannten wenigstens zwei Eingänge (30, 32) in jeden in dem Modell (12) enthaltenen Funktionsblock (20-26),
Einspeisen eines weiteren externen Eingangssignals (62, 64, 66) in Bezug auf den Kompressor in wenigstens einen weiteren Eingang des wenigstens einen Turbinenfunktionsblocks (22),
Einspeisen des genannten zweiten externen Eingangssignals (52) in einen ersten Funktionsblock (20-26) innerhalb der Folge aller in dem Modell (12) enthaltenen Funktionsblöcke (20-26) am Übrigen der genannten wenigstens zwei Eingänge (30, 32),
Einspeisen des Ausgangs (40) des genannten ersten Funktionsblocks (20-26) in den nächsten Funktionsblock (20-26) in der Reihe am Übrigen der genannten wenigstens zwei Eingänge (30, 32) und
Einspeisen, für nachfolgende Funktionsblöcke (20, 26), des Ausgangs des vorhergehenden Funktionsblocks (20-26) in den nächsten Funktionsblock (20-26) in der Reihe am Übrigen der wenigstens zwei Eingänge (30, 32).

14. Motorsteuermodul, umfassend die Controllereinrichtung (10) nach einem der Ansprüche 1 bis 12.

## Revendications

1. Système de commande pour un moteur à combustion interne (8) avec au moins une turbine, au moins un compresseur et un conduit d'échappement (1), en employant un modèle (12) dudit conduit d'échappement (1),
dans lequel ledit conduit d'échappement (1) comprend ladite au moins une turbine (2),
dans lequel ledit modèle (12) comprend une succession de blocs fonctionnels (20, 22, 24, 26) représentant chacun un élément ou un dispositif du conduit d'échappement et étant adapté pour exécuter des fonctions mathématiques en relation avec au moins deux signaux d'entrée (54, 40) appliqués sous forme de deux entrées (30, 32) aux blocs fonctionnels (20-26),
dans lequel lesdites au moins deux entrées (30, 32) sont les mêmes sur tous les blocs fonctionnels (20-26) dans le sens qu'elles sont capables de traiter les mêmes signaux d'entrée ou le même type de signaux d'entrée sur tous les blocs fonctionnels,
**caractérisé en ce que**
au moins un bloc fonctionnel (20, 22, 24, 26) est un bloc fonctionnel de turbine (22) et est adapté à exécuter des fonctions mathématiques représentant un modèle de la turbine en relation avec lesdites au moins deux entrées (30, 32), et
dans lequel ledit bloc fonctionnel de turbine (22) comprend au moins une autre entrée à laquelle est appliquée au moins un autre signal d'entrée externe (62, 64, 66) en relation avec le compresseur.

2. Système de commande selon la revendication 1,
dans lequel chacun des blocs fonctionnels (20-26) est adapté à générer au moins un signal de sortie à titre de sortie (40) du bloc fonctionnel pertinent (20-26) et
dans lequel ladite au moins une sortie (40) est la même, dans le sens où elle est compatible ou fonctionnellement identique, sur tous les blocs fonctionnels.

3. Système de commande selon la revendication 2,
dans lequel un premier desdits au moins deux signaux d'entrée (54, 40) est simultanément fourni à tous les blocs fonctionnels (20-26).

4. Système de commande selon la revendication 2 ou 3,
dans lequel, dans une succession de blocs fonctionnels (20-26), ladite au moins une sortie (40) d'un premier bloc fonctionnel (20-26) est l'une desdites au moins deux entrées (30, 32) d'un second bloc fonctionnel (20-26) suivant en ligne avec ledit premier bloc fonctionnel (20-26).

5. Système de commande selon la revendication 4,
dans lequel lesdites au moins deux entrées (30, 32) dudit premier bloc fonctionnel (20-26) sont adaptées pour des valeurs mesurées qu'il s'agit d'alimenter audit premier bloc fonctionnel (20-26).

6. Système de commande selon l'une quelconque des revendications précédentes,
dans lequel le bloc fonctionnel de turbine (22) comprend des blocs fonctionnels internes (78, 80, 82, 84),
dans lequel un premier bloc fonctionnel interne (80) est adapté pour générer une capacité thermique d'un gaz d'entrée,
dans lequel un second bloc fonctionnel interne (80) est adapté pour générer une capacité thermique de l'air à l'entrée, et
dans lequel un quatrième bloc fonctionnel interne (84) est adapté pour générer une sortie en relation avec le compresseur (3).

7. Système de commande selon la revendication 6,
dans lequel ledit quatrième bloc fonctionnel interne (84) comprend des cartes de compresseur et est adapté à générer ladite sortie en relation avec le compresseur (3) en se basant sur l'un au moins desdits signaux d'entrée (62, 64, 66) en relation avec le compresseur (3) et sur lesdites cartes de compresseur.

8. Système de commande selon la revendication 7,
dans lequel ladite sortie en relation avec le compresseur (3) est une efficacité du compresseur et une vitesse du compresseur.

9. Système de commande selon la revendication 7 ou 8,
dans lequel ledit au moins un signal d'entrée (62, 64, 66) en relation avec le compresseur (3) peut être sélectionné parmi le groupe comprenant une température d'air à l'entrée, un débit d'air, une pression à l'entrée du compresseur et une pression à la sortie du compresseur.

10. Système de commande selon l'une quelconque des revendications 6 à 9,
dans lequel un troisième bloc fonctionnel interne (82) est adapté pour générer une sortie (40) en se basant sur l'une au moins desdites sorties dudit premier, dudit second et dudit quatrième bloc fonctionnel interne (78, 80, 84).

11. Système de commande selon la revendication 10,
dans lequel ladite sortie dudit troisième bloc fonctionnel interne (82) représente une température d'un gaz en sortie de la turbine (2).

12. Système de commande selon l'une quelconque des revendications 1 à 10, dans lequel la sortie (40) de chaque bloc fonctionnel est connectée à l'une desdites deux entrées (30, 32) du bloc fonctionnel suivant en ligne.

13. Procédé d'utilisation du système de commande selon l'une quelconque des revendications 2 à 5, ledit procédé comprenant les étapes consistant à :
fournir un premier et un second signal d'entrée externe (50, 52) au système de commande (10) et au modèle (12) compris dans le système de commande (10) ;
fournir à l'une desdites au moins deux entrées (30, 32) ledit premier signal d'entrée externe (50) à chaque bloc fonctionnel (20-26) compris dans le modèle (12) ;
fournir un autre signal d'entrée externe (62, 64, 66) en relation avec le compresseur à au moins une autre entrée dudit au moins un bloc fonctionnel de turbine (22) ;
fournir ledit second signal d'entrée externe (52) à un premier bloc fonctionnel (20-26) dans la succession de tous les blocs fonctionnels (20-26) compris dans le modèle (12) au niveau du reste desdites au moins deux entrées (30, 32) ;
fournir la sortie (40) dudit premier bloc fonctionnel (20-26) au bloc fonctionnel (20-26) suivant en ligne au niveau du reste desdites au moins deux entrées (30, 32), et
fournir pour les blocs fonctionnels successifs (20-26) la sortie du bloc fonctionnel précédent (20-26) au bloc fonctionnel (20-26) suivant en ligne au niveau du reste desdites au moins deux entrées (30, 32).

14. Module de commande moteur comprenant le système de commande (10) selon l'une quelconque des revendications 1 à 12.
